(19) Europäisches Patentamt
European Patent Office
Office européen des brevets

(11) EP 0 492 222 B1

(12) EUROPEAN PATENT SPECIFICATION

(45) Date of publication and mention of the grant of the patent:
**13.11.1996 Bulletin 1996/46**

(51) Int Cl.[6]: **C09K 19/04**, C09K 19/02, C09K 19/42, C09K 19/44

(21) Application number: **91120994.8**

(22) Date of filing: **06.12.1991**

(54) **Liquid crystal display device**

Flüssigkristallanzeige

Affichage à cristaux liquide

(84) Designated Contracting States:
**DE GB**

(30) Priority: **20.12.1990 EP 90124922**
**03.05.1991 EP 91107201**

(43) Date of publication of application:
**01.07.1992 Bulletin 1992/27**

(73) Proprietor: **MERCK PATENT GmbH**
**D-64271 Darmstadt (DE)**

(72) Inventors:
- **Finkenzeller, Ulrich, Dr.**
  **W-6831 Plankstadt (DE)**
- **Weber, Georg**
  **W-6101 Erzhausen (DE)**
- **Reiffenrath, Volker**
  **W-6101 Rossdorf (DE)**

(56) References cited:
**EP-A- 0 316 715** **EP-A- 0 423 926**
**WO-A-86/04081**

- **WORLD PATENTS INDEX LATEST Derwent Publications Ltd., London, GB; AN 88-296466**
- **WORLD PATENTS INDEX LATEST Derwent Publications Ltd., London, GB; AN 87-172923**

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 492 222 B1

Printed by Jouve, 75001 PARIS (FR)

## Description

The invention relates to liquid crystal display devices exhibiting an improved temperature coefficient of the threshold voltage and to liquid crystalline materials being used therein.

If a LC display device is to be operated over a wide temperature range a low temperature-dependence of the threshold voltage is generally required because in this case either an electronic compensation of the temperature shift can be completely omitted or the compensation electronics needs to be less sophisticated and therefore less expensive than in a LC device with a medium or even high temperature coefficient of the threshold voltage.

So both from a technical and an economical point of view LC display devices with a low temperature coefficient $\gamma$ defined via (1) are preferred

$$\gamma = \frac{d\,V_{th}}{dT} \qquad (1)$$

The threshold voltage can be defined, for example, as the voltage which produces 10 percent transmission at a temperature of 20 °C and a viewing angle of $\Theta = 0°$ which is generally abbreviated as $V_{10,0,20}$. Other definitions are also possible (see vor example G.W. Gray, ed., Thermotropic Liquid Crystals, p. 81-87) and the suitability of the different definitions usually depends on the specific experimental set-up.

In the present application the definition

$$V_{th} = V_{10,0,20}$$

has been adopted.

In DE 3606787 a mixture concept for LC display devices with a low temperature dependence of the threshold voltage has been proposed LC materials described there contain a dielectrically positive component (A) and a dielectrically neutral component; dielectrically positive compounds used in component (A) are, for example, 3-halogenocyanophenyls, 3-halogeno-4-isothiocyanotophenyls and 3,4-dihalogenophenyls. It is true that the LC mixture examples given in DE 3606787 are characterized by rather advantageous values for $\gamma$ of, for example, 3.5 mV/°C or even less. On the other hand, these mixtures are often characterized by rather poor values for the steepness of the electrooptical characteristic line, the ratio of the elastic constants for bending and spreading and the optical and dielectric anisotropies.

Moreover a rather low average value of $\gamma$ in a certain finite temperature interval, for example between 0 °C and 40 °C, does not necessarily guarantee a good compatibility of this mixture with the driving electronics. With respect to a simple and cheap electronical compensation it is generally advantageous that the mixture exhibits a more or less linear-dependence on temperature. From an electronic point of view another preferred temperature behaviour is when the threshold voltage $V_{th}$ is maximum around the usual working temperature while varying more or less linearly with a rather low slope towards the ends of the finite working temperature range.

These requirements are fulfilled by the state of the art mixtures only to an insufficient degree.

EP 0,316,715 teaches the use of ethyl-linked compounds with the 3,5-difluoro-4-cyano phenyl moiety to increase the dielectrical anisotropy of strongly dielectrically positive liquid crystal mixtures, reducing the operation voltage of TN cells maintaining a reasonable deep temperature storage behaviour.

EPO 0,423,926 uses an ethyl-linked cyanobiphenyl with the same substitutive pattern at the termal phenyl ring together with cyclohexyl benzonitriles in a TN cell.

JP 63-216,858 suggests an ethyl-linked three-ring compound with the same substitution pattern to reduce the driving voltage of a liquid crystal for high multiplex TN.

JP 62-103,037 also realizes high dielectric anisotropics using similar ethyl-linked compounds.

WO 86/04 081 teaches to improve the temperature dependence of the electrooptical properties of high multiplex TN displays in a general way.

It was an object of the present invention to provide LC displays devices exhibiting an improved temperature coefficient $\gamma$ of the threshold voltage in comparison to state of the art mixtures.

It was another object of the present invention to provide LC display devices allowing a rather simple and cheap electronical compensation of the temperature dependence of the threshold voltage.

Still other objects, features and attendant advantages of the present invention will become apparent to those skilled in the art from reading of the following detailed description taken in conjunction with the accompanying drawing.

It was found that these and other advantages can be achieved by providing the operable LC display device according to the invention having a threshold voltage dependent on temperature and having a pair of carrier plates spaced from one another to define a space therebetween, means hermetically sealing said plates to one another so as to form

a chamber, a layer of liquid crystal material with positive dielectric anisotropy positioned within this chamber, said liquid crystal material including a nematic carrier host and a strongly dielectrically positive additive, the improvement comprising wherein said strongly dielectrically positive additive comprises at least one derivative of 2,6-difluorobenzonitrile striving within a finite working temperature range to generate an improved temperature coefficient of the threshold voltage.

The LC display device according to the invention employs a dielectrically positive liquid crystal material and is based on the principle of the twisted nematic cell or on other cell types containing dielectrically positive liquid crystal materials. The term twisted nematic cell is used in a wide sense here and comprises cells with twist angles ranging from 0 to 600°, i.e. LTN cells (low twisted nematic), TN-cells (twisted nematic cells with a twist angle of about 90°) and STN cells (supertwisted nematic). The device contains at least one liquid crystal layer which is sandwiched between 2 substrates the insides of which exhibit transparent electrode layers with superpositioned transparent alignment layers; at least one of the substrates is transparent. The electrode layers are usually made of indium tin oxide (ITO) or indium oxide ($In_2O_3$). The alignment layers can be obtained, for example, by applying a polymer film such as a PVA or a polyimide film with subsequent rubbing or by other methods.

Different surface tilt angles $\alpha$ can be obtained by using different alignment methods as is described for example in G.W. Gray et al., loc. cit., p. 74-77. Twisted nematic cells with twist angles $\Phi \leq 200°$ are usually operated with relatively small surface tilt angles, for example in the range from 0.5° to 10°, while at higher twist angles $\Phi \geq 200°$ greater tilt angles, for example in the range from 2° to 45°, are usually necessary.

The structure of the liquid crystal layer in the non-driven state is determined mainly by the angle between the directions of the alignment layers on the substrate, by the surface tilt angle and by the twist angle.

LC display devices may contain one or more additional liquid crystal layers which are generally used to eliminate interference colours, especially for example, in standard STN LC displays devices, and/or in order to improve contrast and/or the viewing angle dependence of contrast. Instead of additional liquid crystal layers other compensation media, like for example, organic polymer films or liquid crystalline polymer films (see for example DE 3919387) may be used.

The construction of the LC display devices according to the invention of which the principle is outlined here corresponds to the type of construction which is usual for such displays. The term of the usual type of construction is here used in a wide meaning and also comprises all variations and modifications of cells employing dielectrically positive nematic liquid crystals. A more detailed description of typical types of construction can be found, for example, in G.W. Gray, loc. cit., chapter 3, B.S. Scheuble, Kontakte, Darmstadt, 1989 (1), p. 34-48 and E. Kaneko, Liquid Crystal TV Displays, Tokyo, 1987, see especially chapter 2 and 3.

However, an essential difference between the LC display devices according to the invention and those of the state of the art consists in the choice of the liquid crystal material.

The liquid crystal material according to the invention exhibits a positive dielectrical anisotropy and includes a nematic carrier host and a strongly dielectrically postiive additive the latter comprising at least one derivative of 2,6-difluorobenzonitriles.

The following smaller group of 2,6-difluorobenzonitriles of formulae I-III is preferred

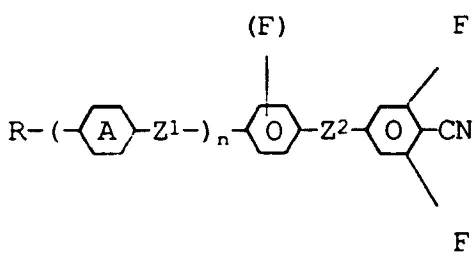

I

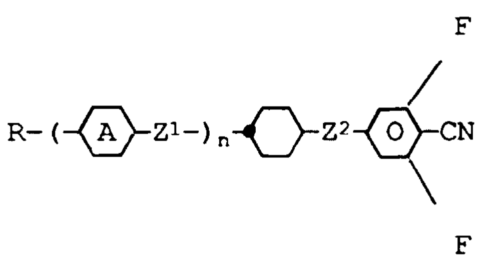

II

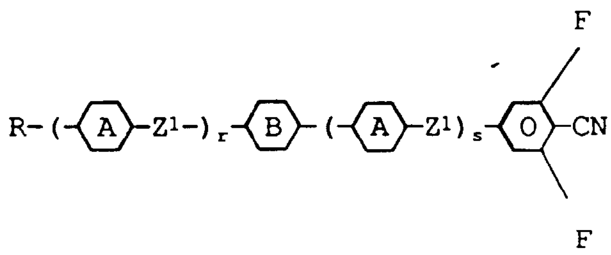

III

wherein

R is alkyl having 1 to 15 C atoms or alkenyl having 3 to 15 C atoms, it also being possible for one $CH_2$ group in each of these radicals to be replaced by -O-, -CO-, -COO- or -OCO-.

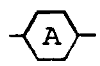

is a 1,4-phenylene group, a 2-fluoro or 3-fluoro-1,4-phenylene group or a 1,4-cyclohexylene group,

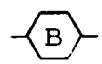

is 1,3-dioxane-2,5-diyl, tetrahydropurane-2,5-diyl, pyrimidine-2,5-diyl or pyridine-2,5-diyl

$Z^1$ is $-CH_2CH_2-$, -COO- or a single bond

$Z^2$ is $-CH_2CH_2-$, -COO-, -C≡C- or a single bond

n, r and s are independently from each other 0, 1 or 2,

r + s is 0, 1 or 2, and

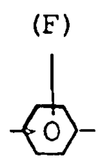

denotes an unsubstituted or in 2- or 3-position laterally monofluorinated 1,4-phenylene group

For the sake of simplicity the following abbreviations are used in the following:

| | |
|---|---|
| Phe | 1,4-phenylene |
| Phe.2F | 2-fluoro-1,4-phenylene |
| Phe.3F | 3-fluoro-1,4-phenylene |
| Phe. (F) | laterally unsubstituted or in 2- or 3-position laterally monofluorinated 1,4-phenylene |
| Phe.3F5F | 3,5-difluoro-1,4-phenylene |
| Cyc | 1, 4-cyclohexylene |

| | |
|---|---|
| Dio | 1,3-dioxane-2,5-diyl |
| Thp | tetrahydropurane-2,5-diyl |
| Pyr | pyrimidine-2,5-diyl |
| Pyd | pyridine-2,5-diyl |

The compounds of formulae I-III comprise binuclear, trinuclear and tetranuclear compounds the binuclear and trinuclear compounds being generally preferred.

The compounds of formulae I-III may contain one or more linking groups $Z^1$ and $Z^2$. The linking groups $Z^1$ and $Z^2$ preferably denote $-CH_2-CH_2-$ or a single bond while the carboxylate group -COO- generally is less preferred. Compounds wherein at least one of $Z^1$ and $Z^2$ denotes a single bond are especially preferred.

Liquid crystalline materials according to the invention preferably contain at least one of the following compounds according to the formulae I.1 - I.24, II.1 - II.11 or III.1 - III.13:

R-Phe-Phe.3F5F-CN I.1

R-Phe.2F-Phe.3F5F-CN I.2

R-Phe.3F-Phe.3F5F-CN I.3

R-Phe-$CH_2CH_2$-Phe.3F5F-CN I.4

R-Phe-C≡C-Phe.3F5F-CN I.5

R-Phe-COO-Phe.3F5F-CN I.6

R-Phe-Phe-Phe.3F5F-CN I.7

R-Cyc-Phe-Phe.3F5F-CN I.8

R-Phe.2F-Phe-Phe.3F5F-CN I.9

R-Phe.3F-Phe-Phe.3F5F-CN I.10

R-Phe-Phe.3F-Phe.3F5F-CN I.11

R-Phe.(F)-Phe-$CH_2CH_2$-Phe.3F5F-CN I.12

R-Phe.(F)-Phe-COO-Phe.3F5F-CN I.13

R-Cyc-Phe.(F)-Phe.3F5F-CN I.14

| | |
|---|---|
| R-Cyc-Phe.(F)-$CH_2CH_2$.3F5F-CN | I.15 |
| R-Cyc-Phe.(F)-C≡C-Phe.3F5F-CN | I.16 |
| R-Cyc-Phe.(F)-COO-Phe.3F5F-CN | I.17 |
| R-Phe.(F)-$CH_2CH_2$-Phe-Phe.3F5F-CN | I.18 |
| R-Phe.(F)-C≡C-Phe-Phe.3F5F-CN | I.19 |
| R-Phe.(F)-COO-Phe-Phe.3F5F-CN | I.20 |
| R-Cyc-$CH_2CH_2$-Phe-Phe.3F5F-CN | I.21 |
| R-Cyc-Phe-Phe-Phe.3F5F-CN | I.22 |
| R-Cyc-Cyc-Phe-Phe.3F5F-CN | I.23 |
| R-Cyc-Cyc-$CH_2CH_2$-Phe-Phe-3F5F-CN | I.24 |
| R-Cyc-Phe.3F5F-CN | II.1 |
| R-Cyc-$CH_2CH_2$-Phe.3F5F-CN | II.2 |
| R-Cyc-COO-Phe.3F5F-CN | II.3 |
| R-Cyc-Cyc-Phe.3F5F-CN | II.4 |
| R-Cyc-Cyc-$CH_2CH_2$-Phe.3F5F-CN | II.5 |
| R-Cyc-Cyc-COO-Phe.3F5F-CN | II.6 |
| R-Phe.(F)-Cyc-Phe.3F5F-CN | II.7 |
| R-Phe.(F)-Phe.(F)-Cyc-Phe.3F5F-CN | II.8 |
| R-Phe.(F)-Cyc-Cyc-Phe.3F5F-CN | II.9 |

| | |
|---|---|
| R-Cyc-Cyc-Cyc-Phe.3F5F-CN | II.10 |
| R-Phe.(F)-Phe.(F)-$CH_2CH_2$-Cyc-Phe.3F5F-CN | II.11 |
| R-Dio-Phe.3F5F-CN | III.1 |
| R-Pyr-Phe.3F5F-CN | III.2 |
| R-Pyd-Phe.3F5F-CN | III.3 |
| R-Pyr-Phe.(F)-Phe.3F5F-CN | III.4 |
| R-Pyd-Phe.(F)-Phe.3F5F-CN | III.5 |
| R-Pyr-Phe.(F)-$CH_2CH_2$-Phe.3F5F-CN | III.6 |
| R-Pyd-Phe.(F)-$CH_2CH_2$-Phe.3F5F-CN | III.7 |
| R-Cyc-Pyr-Phe.3F5F-CN | III.8 |
| R-Dio-Phe.(F)-Phe.3F5F-CN | III.9 |
| R-Dio-Phe.(F)-COO-Phe.3F5F-CN | III.10 |
| R-Dio-Phe.(F)-$CH_2CH_2$-Phe.3F5F-CN | III.11 |
| R-Phe-Dio-Phe.3F5F-CN | III.12 |
| R-Cyc-Dio-Phe.3F5F-CN | III.13 |

Especially preferred are liquid crystalline materials containing at least one compound selected from the group comprising compounds of formulae I.1, I.2, I.3, I.4, I.8, I.21, II.1, II.2, II.4, II.5 and II.10.

In the compounds of formulae I-III and I.1-I.24, II.1-II.11 and III.1-III.13 R is preferably alkyl, alkoxy or alkenyl and furthermore oxaalkyl.

If R is an alkyl radical and/or alkoxy radical, it can be straight-chained or branched. Preferably it is straight-chained, has 1, 2, 3, 4, 5, 6 or 7 carbon atoms and is accordingly preferably methyl, ethyl, propyl, butyl, pentyl, hexyl, heptyl, methoxy, ethoxy, propoxy, butoxy, pentoxy, hexoxy or heptoxy, furthermore, octyl, nonyl, decyl, undecyl, dodecyl, tridecyl, tetradecyl, pentadecyl, octoxy, nonoxy, decoxy, undecoxy, dodecoxy, tridecoxy or tetradecoxy.

Oxaalkyl is preferably straight-chained 2-oxapropyl (= methoxymethyl), 2- (= ethoxymethyl) or 3-oxabutyl (= 2-methoxyethyl), 2-, 3- or 4-oxapentyl, 2-, 3-, 4- or 5-oxahexyl, 2-, 3-, 4-, 5- or 6-oxaheptyl, 2-, 3-, 4-, 5-, 6- or 7-oxaoctyl, 2-, 3-, 4-, 5-, 6-, 7- or 8-oxanonyl, 2-, 3-, 4-, 5-, 6-, 7-, 8- or 9-oxadecyl.

If R is an alkyl radical in which one $CH_2$ group,has been replaced by -CH=CH-, it can be straight-chained or

branched. Preferably, it is straight-chained and has 3 to 10 carbon atoms. Accordingly, it is in particular prop-1- or prop-2-e-nyl, but-1-, -2- or but-3-enyl, pent-1-, -2-, -3- or pent-4-enyl, hex-1-, -2-, -3-, -4- or hex-5-enyl, hept-1-, -2-, -3-, -4-, -5- or hept-6-enyl, oct-1-, -2-, -3-, -4-, -5-, -6- or oct-7-enyl, non-1-, -2-, -3-, -4-, -5-, -6-, -7- or non-8-enyl, dec-1-, -2-, -3-, -4-, -5-, -6-, -7-, -8- or dec-9-enyl.

If R is an alkyl radical in which one $CH_2$ group has been replaced by an acyloxy group -CO-O- or an oxycarbonyl group -O-CO- it can be straight-chained or branched. Preferably, it is straight-chained and has 2 to 6 carbon atoms. Accordingly, it is in particular acetyloxy, propionyloxy, butyryloxy, pentanoyloxy, hexanoyloxy, acetyloxymethyl, propionyloxymethyl, butyryloxymethyl, pentanoyloxymethyl, 2-acetyloxyethyl, 2-propionyloxyethyl, 2-butyryloxyethyl, 3-acetyloxypropyl, 3-propionyloxypropyl, 4-acetyloxybutyl, methoxycarbonyl, ethoxycarbonyl, propoxycarbonyl, butoxycarbonyl, pentoxycarbonyl, methoxycarbonylmethyl, ethoxycarbonylmethyl, propoxycarbonylmethyl, butoxycarbonylmethyl, 2-(methoxycarbonyl)ethyl, 2-(ethoxycarbonyl)ethyl, 2-(propoxycarbonyl)ethyl, 3-(methoxycarbonyl)propyl, 3-(ethoxycarbonyl)propyl, 4-(methoxycarbonyl)butyl.

If R is an alkyl radical in which one $CH_2$ group has been replaced by unsubstituted or substituted -CH=CH- and one adjacent $CH_2$ group by CO or CO-O or O-CO-, it can be straight-chained or branched. Preferably, it is straight-chained and has 4 to 13 carbon atoms. Accordingly, it is particular acryloyloxymethyl, 2-acryloyloxyethyl, 3-acryloyloxypropyl, 4-acryloyloxybutyl, 5-acryloyloxypentyl, 6-acryloyloxyhexyl, 7-acryloyloxyheptyl, 8-acryloyloxyoctyl, 9-acryloyloxynonyl, 10-acryloyloxydecyl, methacryloyloxymethyl, 2-methacryloyloxyethyl, 3-methacryloyloxypropyl, 4-methacryloyloxybutyl, 5-methacryloyloxypentyl, 6-methacryloyloxyhexyl, 7-methacryloyloxyheptyl, 8-methacryloyloxyoctyl, 9-methacryloyloxynonyl.

Compounds of formula I-III containing branched wing groups R can in some cases be important because of better solubility in the conventional liquid-crystalline basis materials, but in particular as chiral doping substances, if they are optically active.

Branched groups of this type contain, as a rule, not more than one chain branching. Preferred branched radicals R are isopropyl, 2-butyl (= 1-methylpropyl), isobutyl (= 2-methylpropyl), 2-methylbutyl, isopentyl (= 3-methylbutyl), 2-methylpentyl, 3-methylpentyl, 2-ethylhexyl, 2-propylpentyl, isopropoxy, 2-methylpropoxy, 2-methylbutoxy, 3-methylbutoxy, 2-methylpentoxy, 3-methylpentoxy, 2-ethylhexoxy, 1-methylhexoxy, 1-methylheptoxy.

If R is an alkyl radical in which two or more $CH_2$ groups have been replaced by -O- and/or -CO-O-, it can be straight-chained or branched. Preferably, it is branched and has 3 to 12 carbon atoms. Accordingly, it is in particular biscarboxymethyl, 2,2-biscarboxyethyl, 3,3-biscarboxypropyl, 4,4-biscarboxybutyl, 5,5-biscarboxypentyl, 6,6-biscarboxyhexyl, 7,7-biscarboxyheptyl, 8,8-biscarboxyoctyl, 9,9-biscarboxynonyl, 10,10-biscarboxydecyl, bis(methoxycarbonyl) methyl, 2,2-bis(methoxycarbonyl)ethyl, 3,3-bis(methoxycarbonyl)propyl, 4,4-bis(methoxycarbonyl)butyl, 5,5-bis(methoxycarbonyl)pentyl, 6,6-bis(methoxycarbonyl)hexyl, 7,7-bis(methoxycarbonyl)heptyl, 8,8-bis(methoxycarbonyl)octyl, bis(ethoxycarbonyl)methyl, 2,2-bis(ethoxycarbonyl)ethyl, 3,3-bis(ethoxycarbonyl)propyl, 4,4-bis(ethoxycarbonyl)butyl, 5,5-bis(ethoxycarbonyl)hexyl.

Formulae I-III comprise not only the racemates of these compounds but also the optical antipodes and their mixtures.

Of these compounds of the formulae I-III and the subformulae, those are preferred in which at least one of the radicals contained therein has one of the preferred meanings mentioned.

The compounds of formulae I-III and formulae I.1-I.24, I.1-II.11 and III.1-III.13 can be prepared by methods which are described, for example, in DE 3209178 and US 4,853,152. Other methods to prepare these compounds are known per se, such as are described in the literature (for example in the standard works such as Houben-Weyl, Methoden der Organischen Chemie (Methods of Organic Chemistry), Georg-Thieme Verlag, Stuttgart Vol. IX, p. 867 ff.) under reaction conditions which are known and suitable for the reactions mentioned. It is also possible to make use of variations which are known per se and not mentioned in more detail at this point.

Liquid crystalline materials according to the invention containing at least one derivative of 2,6-difluorobenzonitrile, preferably, however, at least one compound according to formulae I-III and in particular at least one compound of formulae I.1-I.24, II.1-II.11 and III.1-III.8 are characterized by an improved temperature coefficient of the threshold voltage. The expert can easily choose without further elaboration and without any inventive input 2,6-difluorobenzonitriles, especially, however, 2,6-difluorobenzonitriles of formulae I-III and, in particular, of formulae I.1-I.24, II.1-II.11 and III.1-III.8 in order to improve or optimize other properties of the liquid crystal materials according to the invention with respect to the intended application. STN displays often exhibit, for example, relatively large values for the optical retardation $d\Delta n$ of, for example, 0,8 μm to 1,4 μm; in this case it is often desirable to use high-$\Delta n$ liquid crystal materials which allow to reduce of the layer thickness d and hence of the switching times. For this application the expert will prefer high-$\Delta n$ 2,6-difluorobenzonitriles like, for example, compounds of formulae I.1-I.7, I.9-I.13, I.18-I.20 or III.2-III. 7. STN displays with rather low values of $d.\Delta n$ of 0.4 μm to 0.8 μm like, for example, OMI displays (see, for example, Schadt, M. et al. Appl. Physl. Lett. 50 (1987) 236) or other device types (see for example DE 3022818) generally require liquid crystal materials with a rather low or low value of $\Delta n$, and the expert will preferably select, for example, those compounds of formulae I.1-I.24, II.1II.11 and III.1-III.13 exhibiting at least one saturated ring system.

The expert can further select compounds of the well defined and rather restricted compound class of 2,6-difluorobenzonitriles, especially, however, of the smaller subgroup of 2,6-difluorobenzonitriles of formulae I-III and in particular of the rather small and preferred subgroup of compounds of formulae I.1-I.24, II.1-II.11 and III.1-III.13 in order to improve or optimize other properties of the liquid crystal materials according to the invention such as, for example, the flow viscosity, the clearing point and/or the nematic phase range.

Preferred are liquid crystal materials containing at least one compound of formulae I.1 - I.24, II.1 - II.11 and III.1 - III.13 the ring groups of which are selected from the following structures

Phe, Phe.2F, Phe.3F, Phe.3FSF, Cyc, Dio, Thp, Pyr, Pyd and are linked directly via one or more single bonds and/or not more than one ethylene group.

Especially preferred are liquid crystal materials containing one or more compounds of formulae I and/or II wherein

n is 0 or 1,

$Z^1$ and $Z^2$ independently from each other denote a single bond or $-CH_2-CH_2-$,

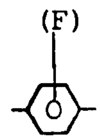

is Phe or Phe.3F, and

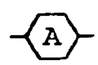

is Cyc, Phe, Phe.2F or Phe.3F and, in particular, Cyc or Phe.

Further preferred are liquid crystal materials containing one or more compounds of formula III wherein

r is 0

s is 0 or 1, and

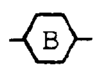

is Pyr or Pyd.

Especially preferred are liquid crystal material containing one or more compounds selected from the following smaller group of compounds:

I.1, I.2, I.3, I.4, I.7, I.8, I.9, I.11, I.12, I.14, I.15, I.18, I.21, II.1, II.2, II.4, II.5, III.2, III.3, III.4, III.5

Liquid crystal display devices containing the preferred and especially preferred materials described above exhibit favourable properties and are preferred.

Liquid crystal materials containing one or more compounds according to formula I-III wherein at least one of the linking groups $Z^1$ and $Z^2$ denote -COO- other exhibit disadvantageous properties which is mainly due to an insufficient stability of these carboxylate compounds. Compounds of formulae I and II wherein $Z^2$ is -COO- and compounds of formula III wherein the linking group adjacent to the terminal ring Phe.3F5F - CN is -COO- often exhibit an insufficient stability and liquid crystal materials containing one or more of these compounds generally exhibit rather disadvantageous properties. If the use of carboxylate compounds of formulae I-III proves to be necessary in some seldom cases, the mass ratio of these compounds with respect to the mass of the liquid crystal material should be low and preferably not more than 5 %, in particular less than 2.5 % and especially less than 1.0 %.

2,6-Difluorobenzonitriles are characterized by relatively high or high values of the dielectric anisotropy $\Delta\varepsilon$ which leads to advantageous values of the threshold voltage Vth.

In addition to these advantageous properties the liquid crystalline materials according to the invention are characterized by an improved temperature coefficient of the threshold voltage within the finite working temperature range which can be defined, for example, as the nematic phase range or as a temperature range required for the respective application.

In a preferred embodiment of the liquid crystal display device according to the invention one or more 2,6-difluorobenzonitriles are so-selected that the threshold voltage $V_{th}$ is at least approximately temperature-independent within the finite working temperture range. Liquid crystal display devices exhibiting a temperature coefficient $\gamma = dV_{th}/dT$ being smaller than $3 \cdot 10^{-2}$ V °C$^{-1}$, especially smaller than $2 \cdot 10^{-2}$ V °C-1 and in particular smaller than $1 \cdot 10^{-2}$ V °C$^{-1}$ are preferred.

In another preferred embodiment of the liquid crystal display device according to the invention one or more 2,6-difluorobenzonitriles are so-selected that $V_{th}$ exhibits a rather well-defined dependence on temperature which is optimally fitted to the requirements of the driving electronics.

In Fig. 1, for example, the temperature dependence of the threshold voltage $V_{th}$ is shown for the liquid crystal material given in Example 1. The threshold voltage of this liquid crystal material is maximum approximately at 35 °C and slightly decreases to lower and higher temperatures. Considering a working temperature range between -30 °C and +70 °C it can be stated that $V_{th}$ exhibits a more or less symmetrical behaviour with respect to its maximum value and that the temperature corresponding to the maximum value of $V_{th}$ is located more or less in center of the this working temperature range. This symmetrical behaviour is especially advantageous from a technical point of view.

In comparison with this the state of the art-mixture ZLI 4246-000 (trade product of E. Merck, Darmstadt, Germany) exhibits rather a slightly s-shaped than a symmetrical curve for the temperature dependence of the threshold voltage $\gamma$ which is disadvantageous. The improvement of $\gamma$ which can be obtained by applying the technical teaching of the present invention is the more valuable because technically used mixtures have to be optimized not only with respect to $\gamma$ but also with respect to other parameters such as working temperature range, viscosity, threshold voltage, steepness of the electrooptical characteristic line, UV and thermal stability etc. It is a general observation, however, that the optimization of one parameter frequently leads to a deterioration of one or even some other parameters. The technical teaching of the present invention therefore considerably enlarges the possibilities to provide mixtures which are tailormade with respect to several different demands.

It is further possible to select one or more 2,6-difluorobenzonitriles in such a way that the threshold voltage exhibits another defined dependence on temperature like for example an at least approximately linear dependence or another type of dependence being optimally fitted to the characteristics of the driving electronics. Liquid crystal display devices exhibiting a linear dependence of the threshold voltage on temperature with $4 \cdot 10^{-3}$ V °C$^{-1}$ $\leq dV_{th}/dT \leq 1.2 \cdot 10^{-2}$ V °C$^{-1}$ and especially with $4.5 \cdot 10^{-3}$ V °C$^{-1}$ $\leq dV_{th}/dT \leq 9.5 \cdot 10^{-3}$ V °C$^{-1}$ are preferred.

The liquid crystal materials according to the invention contain a nematic carrier host and a strongly dielectrically positive additive the latter comprising at least one 2,6-difluorobenzonitril.

The liquid crystal materials preferably contain 2 to 40 and, in particular, 3 to 35 components. Very particularly preferably, the materials contain in addition to one or more 2,6-difluorobenzonitriles 5 to 25 components.

The components of the liquid crystal materials other than 2,6-difluorobenzonitriles are preferably selected from nematic or nematogenic (monotropic or isotropic) substances, in particular substances from the classes of azoxybenzenes, benzylideneanilines, biphenyls, terphenyls, phenyl or cyclohexyl benzoates, phenyl or cyclohexyl cyclohexanecarboxylates, phenyl or cyclohexyl cyclohexylbenzoates, phenyl or cyclohexyl cyclohexylcyclohexanecarboxylates, cyclohexylphenyl benzoates, cyclohexalphenyl cyclohexanecarboxylates, cyclohexylphenyl cyclohexylcycloghexanecarboxylates, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis-cyclohexylbenzenes, 4,4'-bis-cyclohexylbiphenyls, phenyl- or cyclohexylpyrimidines, phenyl- or cyclohexylpyridines, phenyl- or cyclohexyldioxanes, phenyl- or cyclohexyl-1,3-dithianes, 1,2-diphenylethanes, 1,2-dicyclohexylethanes, 1-phenyl-2-cyclohexylethanes, l-cyclohexyl-2-(4-phenylcyclohexyl)ethanes, 1-cyclohexyl-2-biphenylylethanes, 1-phenyl-2-cyclohexylphenylethanes, halogenated or unhalogenated stilbenes, benzyl phenyl ethers, tolanes and substituted cinnamic acids. The 1,4-phenylene groups in these compounds can also be fluorinated.

The most important compounds which are suitable as further components of media according to the invention can be characterized by formulae 1, 2, 3, 4 and 5:

R'-L-E-R" 1

R'-L-COO-E-R" 2

R'-L-OOC-E-R" 3

$$R'\text{-}L\text{-}CH_2CH_2\text{-}E\text{-}R'' \quad 4$$

$$R'\text{-}L\text{-}C{\equiv}C\text{-}E\text{-}R'' \quad 5$$

In the formulae 1, 2, 3, 4 and 5, L and E, which can be identical or different, are each, independently of one another, a divalent radical from the group consisting of -Phe-, -Cyc-, -Phe-Phe-, -Phe-Cyc-, -Cyc-Cyc-, -Pyr-, -Dio-, -G-Phe- and -G-Cyc- and their mirror images, in which Phe is unsubstituted or fluorine-substituted 1,4-phenylene, Cyc is trans-1,4-cyclohexylene or 1,4-cyclohexenylene, Pyr is pyrimidine-2,5-diyl or pyridine-2,5-diyl, Dio is 1,3-dioxane-2,5-diyl and G is 2-(trans-1,4-cyclohexyl)ethyl, pyrimidine-2,5-diyl, pyridine-2,5-diyl or 1,3-dioxane-2,5-diyl.

Preferably, one of the radicals L and E is Cyc, Phe or Pyr. E is preferably Cyc, Phe or Phe-Cyc. Preferably, the media according to the invention contain one or more components selected from the compounds of the formulae 1, 2, 3, 4 and 5, in which L and E are selected from the group consisting of Cyc, Phe and Pyr and simultaneously one or more components are selected from the compounds of the formulae 1, 2, 3, 4 and 5, in which one of the radicals L and E is selected from the group consisting of Cyc, Phe and Pyr and the other radical is selected from the group consisting of -Phe-Phe, -Phe-Cyc-, -Cyc-Cyc-, -G-Phe- and -G-Gyc-, and possibly one or more components are selected from the compounds of the formulae 1, 2, 3, 4, and 5, in which the radicals L and E are selected from the group consisting of -Phe-Cyc-, -Cyc-Cyc-, -G-Phe- and -G-Cyc-.

R' and R" in the compounds of the partial formulae 1a, 2a, 3a, 4a and 5a are each, independently of one another, alkyl, alkenyl, alkoxy, alkenyloxy or alkanoyloxy having up to 8 carbon atoms. In most of these compounds, R' and R" are different from one another and one of these radicals is in most cases alkyl or alkenyl. In the compounds of the partial formulae 1b, 2b, 3b, 4b and 5b, R" is -CN, $-CF_3$, $-OCF_3$, $-OCHF_2$, -F, -Cl or -NCS; in these formulae, R has the meaning mentioned in the compounds of the partial formulae 1a to 5a and is preferably alkyl or alkenyl. However, other variations of the substituents intended for the compounds of the formulae 1, 2, 3, 4 and 5 are common. Many of these substances or even mixtures thereof are commercially available. All these substances are available by methods known from the literature of analogously to those methods.

The media according to the invention preferably contain, in addition to the components from the group of compounds la, 2a, 3a, 4a and 5a (group 1), also components from the group of compounds 1b, 2b, 3b, 4b and 5b (group 2), the relative proportions of which are preferably as follows:

group 1: 0 % to 60 %, in particular 5 to 50%
group 2: 0 % to 60 %, in particular 5 to 40 %

The liquid crystal materials preferably contain 1 % to 40 %, especially 5 to 30 % and in particular not less than 10 % of 2,6-difluorobenzonitriles. The materials preferably contain 2, 3, 4, 5, 6, 7 or 8 2,6-difluorobenzonitriles which are preferably chosen from the compounds of formulae I-III and especially from the compounds of formulae I.1-I.24, II.III. 11 and III.1-III.13.

The materials according to the invention are prepared in a manner customary per se. As a rule, the components are dissolved in one another, advantageously at elevated temperature. By means of suitable additives, the liquid-crystalline materials according to the invention can be modified and optimized with respect to the intended application. This type of additive is known to one skilled in the art and has been described in detail in the literature (see, for example, H. Kelker/R. Hatz, Handbook of Liquid Crystals, Verlag Chemie, Weinheim, 1980). For example, pleochroitic dyes to prepare coloured display systems and/or substances to change the dielectric anisotropy and/or the viscosity and/or chiral dopants to induce a helical structure of the liquid crystal layer and to adjust the twist angle $\Phi$ required and/or to remove reverse twist are generally added.

The examples which follow are intended to illustrate the invention without limiting it. Above and below, percentages are by weight. All temperatures are given in degrees centigrade, m.p. denotes melting point and c.p. = clear point. Furthermore, C denotes crystalline state, N nematic phase, S smectic phase and I isotropic phase. The data between these symbols represent the transition temperatures. $\Delta n$ denotes optical anisotropy (589 nm, 20 °C) and viscosity ($mm^2$/sec) was determined at 20 °C.

Example 1

a) In Fig. 1 the temperature dependence of $V_{th}$ is shown for a STN display according to the invention (full circles) which exhibits the following parameters

twist angle $\Phi$ = 240°

ratio of the cell thickness and the pitch length d/p = 0.5
tilt angle $\alpha$ = 5° and contains a liquid crystal material consisting of:

8 % of 4-pentyl-3",5"-difluoro-4"-cyanoterphenyl
14 % of 1-(trans-4-(trans-4-propylcyclohexyl)-cyclohexyl)-2-(3,5-difluoro-4-cyanophenyl)-ethane
18 % of trans-1-p-methoxyphenyl-4-propylcyclohexane
14 % of trans-1-p-ethoxyphenyl-4-propylcyclohexane
15 % of trans-,trans-4-propoxy-4'-propylcyclohexylcyclohexane
10 % of 4-ethyl-4'-(trans-4-propylcyclohexyl)-biphenyl
8 % of 4-ethyl-4'-(trans-4-pentylcyclohexyl)-biphenyl
4 % of 4,4'-bis-(trans-4-pentylcyclohexyl)-biphenyl
3 % of 4,4'-bis-(trans-4-propylcyclohexyl)-2-fluorobiphenyl
3 % of 4,4'-bis-(trans-4-pentylcyclohexyl)-2-fluorobiphenyl
3 % of 4-(trans-4-pentylcyclohexyl)-4'-(trans-4-propylcyclohexyl)-2-fluorobiphenyl

b) For the sake of comparison the temperature dependence of $V_{th}$ is shown for a state of the art-STN device (open circles) which exhibits the following parameters
twist angle $\Phi$ = 240°
ratio of the cell thickness and the pitch length
d/p = 0.5
tilt angle $\alpha$ = 5° and contains a liquid crystal material consisting of:

2 % of 3-fluoro-4-cyanophenyl 4-ethylbenzoat
3 % of 3-fluoro-4-cyanophenyl 4-propylbenzoat
8 % of 3-fluoro-4-cyanophenyl 4-pentylbenzoat
6 % of 3-fluoro-4-cyanophenyl 4-heptylbenzoat
16 % of trans-1-p-methoxyphenyl-4-propylcyclohexane
12 % of trans-l-p-ethoxyphenyl-4-propylcyclohexane
11 % of trans-,trans-4-propoxy-4'-propylcyclohexylcyclohexane
12 % of 4-ethyl-4'-(trans-4-propylcyclohexyl)-biphenyl
11 % of 4-ethyl-4'-(trans-4-pentylcyclohexyl)-biphenyl
4 % of 4,4'-bis-(trans-4-pentylcyclohexyl)-biphenyl
5 % of 4,4'-bis-(trans-4-propylcyclohexyl)-2-fluorobiphenyl
5 % of 4,4'-bis-(trans-4-pentylcyclohexyl)-2-fluorobiphenyl
5 % of 4-(trans-4-pentylcyclohexyl)-4'-(trans-4-propylcyclohexyl)-2-fluorobiphenyl

c) The STN display according to the invention from Example Ia) exhibits a more or less symmetrical behaviour of $V_{th}$ with respect to its maximum value and the temperature corresponding to the maximum value of $V_{th}$ is located more or less in center of the finite working temperature range between -30 °C and 70 °C.

Contrary to this the state of the art-STN display exhibits a slightly s-shaped curve for the temperature dependence of $V_{th}$ which is disadvantageous from a technical point of view.

Example 2

A STN display according to the invention which exhibits the following parameters
twist angle $\phi$ = 240°
ratio of the cell thickness and the pitch length d/p = 0.5
tilt angle $\alpha$ = 5°
and contains a liquid crystal material consisting of:

5 % of 4-(trans-4-propylcyclohexyl)-3',5'-difluoro-4'-cyanobiphenyl
5 % of 4-pentyl-3",5",-difluoro-4"-cyanoterphenyl
12 % of 4-[trans-4-(trans-5-butylcyclohexyl)-cyclohexyl)]-2,6-difluoro-1-cyanobenzene
18 % of trans-1-p-methoxyphenyl-4-propylcyclohexane
14 % of trans-1-p-ethoxyphenyl-4-propylcyclohexane
15 % of trans-,trans-4-propoxy-4'-propylcyclohexylcyclohexane
10 % of 4-(trans-4-propylcyclohexyl)-4'-ethylbiphenyl
8 % of 4-(trans-4-pentylcyclohexyl)-4'-ethylbiphenyl

| | |
|---|---|
| 4 % | of 4,4'-bis-(trans-4-pentylcyclohexyl)-biphenyl |
| 3 % | of 4,4'-bis-(trans-4-propylcyclohexyl)-2-fluorobiphenyl |
| 3 % | of 4,4'-bis-(trans-4-pentylcyclohexyl)-2-fluorobiphenyl |
| 3 % | of 4-(trans-4-pentylcyclohexyl)-4'-(trans-4-propylcyclohexyl)-2-fluorobiphenyl |

and exhibiting the following parameters

| | |
|---|---|
| melting point = -20 °C | |
| clearing point = 102 °C | |
| viscosity = 24 $mm^2s^{-1}$ | (20 °C) |
| dielectrical anisotropy = 6.2 | (20 °C, 1 kHz) |
| birefringence = 0.1250 | (20 °C, 589 nm), |

exhibits advantageous properties and especially a favourable temperature dependence of the threshold voltage.

<u>Example 3</u>

A STN display according to the invention which exhibits the following parameters
twist angle $\phi$ = 240°
ratio of the cell thickness and the pitch length d/p = 0.5 tilt angle $\alpha$ = 5°
and contains a liquid crystal material consisting of:

| | |
|---|---|
| 8 % | of 4-pentyl-3",5",-difluoro-4"-cyanoterphenyl |
| 5 % | of 4-[trans-4-(trans-4-propylcyclohexyl)-cyclohexyl]-2,6-difluoro-1-cyanobenzene |
| 9 % | of 4-[trans-4-(trans-4-butylcyclohexyl)-cyclohexyl]-2,6-difluoro-1-cyanobenzene |
| 18 % | of trans-1-p-methoxyphenyl-4-propylcyclohexane |
| 14 % | of trans-1-p-ethoxyphenyl-4-propylcyclohexane |
| 15 % | of trans-,trans-4-propoxy-4'-propylcyclohexylcyclohexane |
| 10 % | of 4-(trans-4-propylcyclohexyl)-4'-ethylbiphenyl |
| 8 % | of 4-(trans-4-pentylcyclohexyl)-4'-ethylbiphenyl |
| 4 % | of 4,4'-bis-(trans-4-pentylcyclohexyl)-biphenyl |
| 3 % | of 4,4'-bis-(trans-4-propylcyclohexyl)-2-fluorobiphenyl |
| 3 % | of 4,4'-bis-(trans-4-pentylcyclohexyl)-2-fluorobiphenyl |
| 3 % | of 4-(trans-4-pentylcyclohexyl)-4'-(trans-4-propylcyclohexyl)-2-fluorobiphenyl |

and exhibiting the following properties

| | |
|---|---|
| melting point = -30 °C | |
| clearing point = 102 °C | |
| viscosity = 24 $mm^2s^{-1}$ | (20 °C) |
| dielectrical anisotropy = 6.2 | (20 °C, 1 kHz) |
| birefringence = 0.1252 | (20 °C, 589 nm), |

exhibits advantageous properties and especially a favourable temperature dependence of the threshold voltage.

**Claims**

**1.** A liquid crystal display device having an improved dependence of threshold voltage on temperature and having a pair of carrier plates spaced from one another to define a space therebetween, means hermetically sealing said plates to one another so as to form a chamber, a layer of liquid crystal material with positive dielectric anisotropy positioned within this chamber, said liquid crystal material including a nematic carrier host and a strongly dielectrically positive additive, the improvement comprising wherein said strongly dielectrically positive additive comprises at least two derivatives of 2,6-difluorobenzonitrile.

**2.** A liquid crystal display device according to claim 1 using a twisted nematic liquid crystal cell.

3. A liquid crystal display device according to claim 1 using a super twisted nematic liquid crystal cell.

4. A liquid crystal display device according to claim 1, characterized in that the liquid crystal material contains at least one essentially dielectrically neutral compound selected from the group of compounds of formula 1a to 5a.

R'-L-E-R" 1a

R'-L-COO-E-R" 2a

R'-L-OOC-E-R" 3a

$R'\text{-}L\text{-}CH_2CH_2\text{-}E\text{-}R''$ 4a

$R'\text{-}L\text{-}C{\equiv}C\text{-}E\text{-}R''$ 5a

with
L and E, which can be identical or different, are each, independently of one another, a divalent radical from the group consisting of -Phe-, -Cyc-, -Phe-Phe-, -Phe-Cyc-, -Cyc-Cyc-, -Pyr-, -Dio-, -G-Phe- and -G-Cyc- and their mirror images, in which Phe is unsubstituted or fluorine-substituted 1,4-phenylene, Cyc is trans-1,4-cyclohexylene or 1,4-cyclohexenylene, Pyr is pyrimidine-2,5-diyl or pyridine-2,5-diyl, Dio is 1,3-dioxane-2,5-diyl and G is 2-(trans-1,4-cyclohexyl)ethyl, pyrimidine-2,5-diyl, pyridine-2,5-diyl or 1,3-dioxane-2,5-diyl,
and
R' and R" are each, independently of one another, alkyl, alkenyl, alkoxy, alkenyloxy or alkanoyloxy having up to 8 carbon atoms.

5. A liquid crystal display device as defined in at least one of the claims 1-4, wherein said layer of liquid crystal material is electrically switchable between at least two optical states, and said derivatives of 2,6-difluorobenzonitrile are so-selected that the switch-on threshold voltage and/or the switch-off threshold voltage for said layer are at least approximately temperature-independent within the finite working temperature range.

6. A liquid crystal display device according to claim 5 characterized in that the temperature dependence of the switch-on threshold voltage and/or the switch-off threshold voltage for said liquid crystal layer have a temperature dependence of-less than $2 \cdot 10^{-2}$ V · °$C^{-1}$.

7. A liquid crystal display device as defined in at least on of the claims 1-4, wherein said layer of liquid crystal material is electrically switchable between at least two optical states, and said derivatives of 2,6-difluorobenzonitrile are so-selected in combination with the other compounds of the liquid crystal material that the switch-on threshold voltage and/or the switch-off threshold voltage for said layer are at least approximately linearly dependent upon temperature within the finite working temperature range.

8. A liquid crystal display device as defined in claim 7 characterized in that the temperature dependence of the switch-on threshold voltage and/or the switch-off threshold voltage for said liquid crystal layer is in the range from $4 \cdot 10^{-3}$ V · °$C^{-1}$ to $1.2 \cdot 10^{-2}$ V · °$C^{-1}$ for the finite operation temperature range.

9. A liquid crystal display device as defined in at least one of the claims 1-4, wherein said layer of liquid crystal material is electrically switchable between at least two optical states, and said derivatives of 2,6-difluorobenzonitrile are so-selected in combination with the other compounds of the liquid crystal material that the switch-on threshold voltage and/or the switch-off threshold voltage for said layer pass through a maximum being at least approximately located near the centre of the finite working temperature range.

10. A liquid crystal display device as defined in at least one of the claims 1-9 characterized in that the operation temperature range is at least from 0 °C to +40 °C.

**11.** Liquid crystal material being used in a liquid crystal display device according to one of the claims 1-10.

**Patentansprüche**

**1.** Flüssigkristall-Anzeigevorrichtung mit verbesserter Temperaturabhängigkeit der Schwellenspannung und mit zwei voneinander beabstandeten Trägerplatten, wodurch ein Abstand zwischen ihnen definiert wird, einem Mittel zum hermetischen verkleben der Platten miteinander unter Bildung einer Kammer, einer in dieser Kammer befindlichen Schicht aus einem Flüssigkristallmaterial mit positiver dielektrischer Anisotropie, wobei das Flüssigkristallmaterial noch ein nematisches Trägerwirtsmaterial und einen stark dielektrisch positiven Zusatzstoff enthält, wobei die Verbesserung darin besteht, daß der stark dielektrisch positive Zusatzstoff mindestens zwei 2,6-Difluorbenzonitrilderivate enthält.

**2.** Flüssigkristall-Anzeigevorrichtung nach Anspruch 1, bei der eine verdrillt nematische Flüssigkristallzelle verwendet wird.

**3.** Flüssigkristall-Anzeigevorrichtung nach Anspruch 1, bei der eine höher verdrillt nematische Flüssigkristallzelle verwendet wird.

**4.** Flüssigkristall-Anzeigevorrichtung nach Anspruch 1, dadurch gekennzeichnet, daß das Flüssigkristallmaterial mindestens eine im wesentlichen dielektrisch neutrale Verbindung enthält, die ausgewählt ist aus der Gruppe von Verbindungen der Formeln 1a bis 5a,

R'-L-E-R" 1a

R'-L-COO-E-R" 2a

R'-L-OOC-E-R" 3a

$R'\text{-}L\text{-}CH_2CH_2\text{-}E\text{-}R''$ 4a

$R'\text{-}L\text{-}C{\equiv}C\text{-}E\text{-}R''$ 5a

wobei
L und E, die gleich oder verschieden sein können, jeweils unabhängig voneinander einen zweiwertigen Rest ausgewählt aus der Gruppe bestehend aus -Phe-, -Cyc-, -Phe-Phe-, -Phe-Cyc-, -Cyc-Cyc-, -Pyr-, -Dio-, -G-Phe- und -G-Cyc- und deren Spiegelbildern, worin Phe gegebenenfalls durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl und G 2-(trans-1,4-Cyclohexyl)-ethyl, Pyrimidin-2,5-diyl, Pyridin-2,5-diyl oder 1,3-Dioxan-2,5-diyl bedeutet
und
R' und R" jeweils unabhängig voneinander Alkyl, Alkenyl, Alkoxy, Alkenyloxy oder Alkanoyloxy mit bis zu 8 Kohlenstoffatomen bedeuten.

**5.** Flüssigkristall-Anzeigevorrichtung nach mindestens einem der Ansprüche 1-4, wobei die Schicht aus Flüssigkristallmaterial zwischen mindestens zwei optischen Zuständen elektrisch schaltbar ist und die 2,6-Difluorbenzonitrilderivate so ausgewählt werden, daß die Einschalt-Schwellenspannung und/oder Ausschalt-Schwellenspannung bei dieser Schicht innerhalb des endlichen Arbeitstemperaturbereichs zumindest in etwa temperaturunabhängig sind.

**6.** Flüssigkristall-Anzeigevorrichtung nach Anspruch 5, dadurch gekennzeichnet, daß die Temperaturabhängigkeit der Einschalt-Schwellenspannung und/oder Ausschalt-Schwellenspannung bei dieser Flüssigkristallschicht weniger als $2 \cdot 10^{-2}\ V \cdot {}^{\circ}C^{-1}$ beträgt.

**7.** Flüssigkristall-Anzeigevorrichtung nach mindestens einem der Ansprüche 1-4, wobei die Schicht aus Flüssigkristallmaterial zwischen mindestens zwei optischen Zuständen elektrisch schaltbar ist und die 2,6-Difluorbenzonitrilderivate zusammen mit den anderen Verbindungen des Flüssigkristallmaterials so ausgewählt werden, daß die Einschalt-Schwellenspannung und/oder Ausschalt-Schwellenspannung bei dieser Schicht innerhalb des endlichen Arbeitstemperaturbereichs zumindest in etwa eine lineare Temperaturabhängigkeit zeigen.

**8.** Flüssigkristall-Anzeigevorrichtung nach Anspruch 7, dadurch gekennzeichnet, daß die Temperaturabhängigkeit der Einschalt-Schwellenspannung und/oder Ausschalt-Schwellenspannung bei dieser Flüssigkristallschicht innerhalb des endlichen Arbeitstemperaturbereichs im Bereich von $4 \cdot 10^{-3}$ V · °C$^{-1}$ bis $1{,}2 \cdot 10^{-2}$ V · °C$^{-1}$ liegt.

**9.** Flüssigkristall-Anzeigevorrichtung nach mindestens einem der Ansprüche 1-4, wobei die Schicht aus Flüssigkristallmaterial zwischen mindestens zwei optischen Zuständen elektrisch schaltbar ist und die 2,6-Difluorbenzonitrilderivate zusammen mit den anderen Verbindungen des Flüssigkristallmaterials so ausgewählt werden, daß die Einschalt-Schwellenspannung und/oder Ausschalt-Schwellenspannung bei dieser Schicht ein Maximum durchlaufen, das zumindest in etwa in der Nähe des Mittelpunkts des endlichen Arbeitstemperaturbereichs liegt.

**10.** Flüssigkristall-Anzeigevorrichtung nach mindestens einem der Ansprüche 1-9, dadurch gekennzeichnet, daß der Betriebstemperaturbereich sich mindestens von 0°C bis +40°C erstreckt.

**11.** Flüssigkristallmaterial, das bei einer Flüssigkristall-Anzeigevorrichtung nach einem der Ansprüche 1-10 verwendet wird.

## Revendications

**1.** Dispositif d'affichage à cristaux liquides présentant une amélioration de la dépendance entre la tension de seuil et la température et comportant une paire de plaques de support distantes l'une de l'autre pour définir un espace entre les deux, des moyens pour souder hermétiquement lesdites plaques l'une à l'autre de manière à former une enceinte, une couche de matériau à cristaux liquides à anisotropie diélectrique positive placée à l'intérieur de cette enceinte, ledit matériau à cristaux liquides renfermant un hôte porteur nématique et un additif fortement positif sur le plan diélectrique, l'amélioration résidant dans le fait que ledit additif fortement positif sur le plan diélectrique comprend au moins deux dérivés du 2,6-difluorobenzonitrile.

**2.** Dispositif d'affichage à cristaux liquides selon la revendication 1, employant une cellule de cristal liquide nématique à torsion.

**3.** Dispositif d'affichage à cristaux liquides selon la revendication 1, employant une cellule de cristal liquide nématique à sur-torsion.

**4.** Dispositif d'affichage à cristaux liquides selon la revendication 1, caractérisé en ce que le matériau à cristaux liquides contient au moins un composé essentiellement neutre sur le plan diélectrique choisi dans le groupe des composés de formules 1a à 5a

R'-L-E-R" 1a

R'-L-COO-E-R" 2a

R'-L-OOC-E-R" 3a

$R'\text{-}L\text{-}CH_2CH_2\text{-}E\text{-}R''$ 4a

$R'\text{-}L\text{-}C{\equiv}C\text{-}E\text{-}R''$ 5a

où

L et E, qui peuvent être identiques ou différents, sont chacun, indépendamment l'un de l'autre, un radical divalent du groupe formé par -Phe-, -Cyc-, -Phe-Phe-, -Phe-Cyc-, -Cyc-Cyc-, -Pyr-, -Dio-, -G-Phe- et -G-Cyc-, et leurs images miroir, où Phe est un groupe 1,4-phénylène non substitué ou substitué par un fluor, Cyc est un groupe 1,4-cyclohexylène ou 1,4-cyclohexénylène, Pyr est un groupe pyrimidine-2,5-diyle ou pyridine-2,5-diyle, Dio est un groupe 1,3-dioxane-2,5-diyle et G est un groupe 2-(trans-1,4-cyclohexyl)éthyle, pyrimidine-2,5-diyle, pyridine-2,5-diyle ou 1,3-dioxane-2,5-diyle,

et

R' et R" sont chacun; indépendamment l'un de l'eau, un groupe alkyle, alcényle, alcoxy, alcényloxy ou alcanoyloxy comportant jusqu'à 8 atomes de carbone.

**5.** Dispositif d'affichage à cristaux liquides selon l'une quelconque des revendications 1-4, dans lequel ladite couche de matériau à cristaux liquides est susceptible de commutation électrique entre au moins deux états optiques, et lesdits dérivés de 2,6-dichlorobenzonitrile sont choisis pour que la tension de seuil de fermeture du circuit et/ou la tension de seuil d'ouverture du circuit pour ladite couche soient au moins à peu près indépendantes de la température dans la gamme de températures de travail déterminée.

**6.** Dispositif d'affichage à cristaux liquides selon la revendication 5, caractérisé en ce que la dépendance vis-à-vis de la température de la tension de seuil de fermeture du circuit et/ou de la tension de seuil d'ouverture du circuit pour ladite couche de cristaux liquides est inférieure à $2.10^{-2}$ $V.°C^{-1}$.

**7.** Dispositif d'affichage à cristaux liquides tel que défini dans au moins une des revendications 1-4, dans lequel ladite couche de matériau à cristaux liquides est susceptible de commutation électrique entre au moins deux états optiques, et lesdits dérivés de 2,6-dichlorobenzonitrile sont choisis, en combinaison avec les autres composés du matériau à cristaux liquides, pour que la tension de seuil de fermeture du circuit et/ou la tension de seuil d'ouverture du circuit pour ladite couche soient des fonctions au moins à peu près linéaires de la température au sein de la gamme de températures de travail déterminée.

**8.** Dispositif d'affichage à cristaux liquides selon la revendication 7, caractérisé en ce que la dépendance vis-à-vis de la température de la tension de seuil de fermeture du circuit et/ou de la tension de seuil d'ouverture du circuit pour ladite couche de cristaux liquides est dans la gamme de $4.10^{-3}$ $V.°C^{-1}$ à $1,2.10^{-2}$ $V.°C^{-1}$ pour la gamme de températures de fonctionnement déterminée.

**9.** Dispositif d'affichage à cristaux liquides selon l'une quelconque des revendications 1-4, dans lequel ladite couche de matériau à cristaux liquides est susceptible de commutation électrique entre au moins deux états optiques, et lesdits dérivés de 2,6-dichlorobenzonitrile sont choisis, en combinaison avec les autres composés du matériau à cristaux liquides, pour que la tension de seuil de fermeture du circuit et/ou la tension de seuil d'ouverture du circuit pour ladite couche passent par un maximum situé à peu près au voisinage du centre de la gamme de températures de travail déterminée.

**10.** Dispositif d'affichage à cristaux liquides selon l'une quelconque des revendications 1-9, caractérisé en ce que la gamme de températures de fonctionnement est au moins de 0°C à +40°C.

**11.** Matériau à cristaux liquides utilisé dans un dispositif d'affichage à cristaux liquides selon l'une quelconque des revendications 1-10.

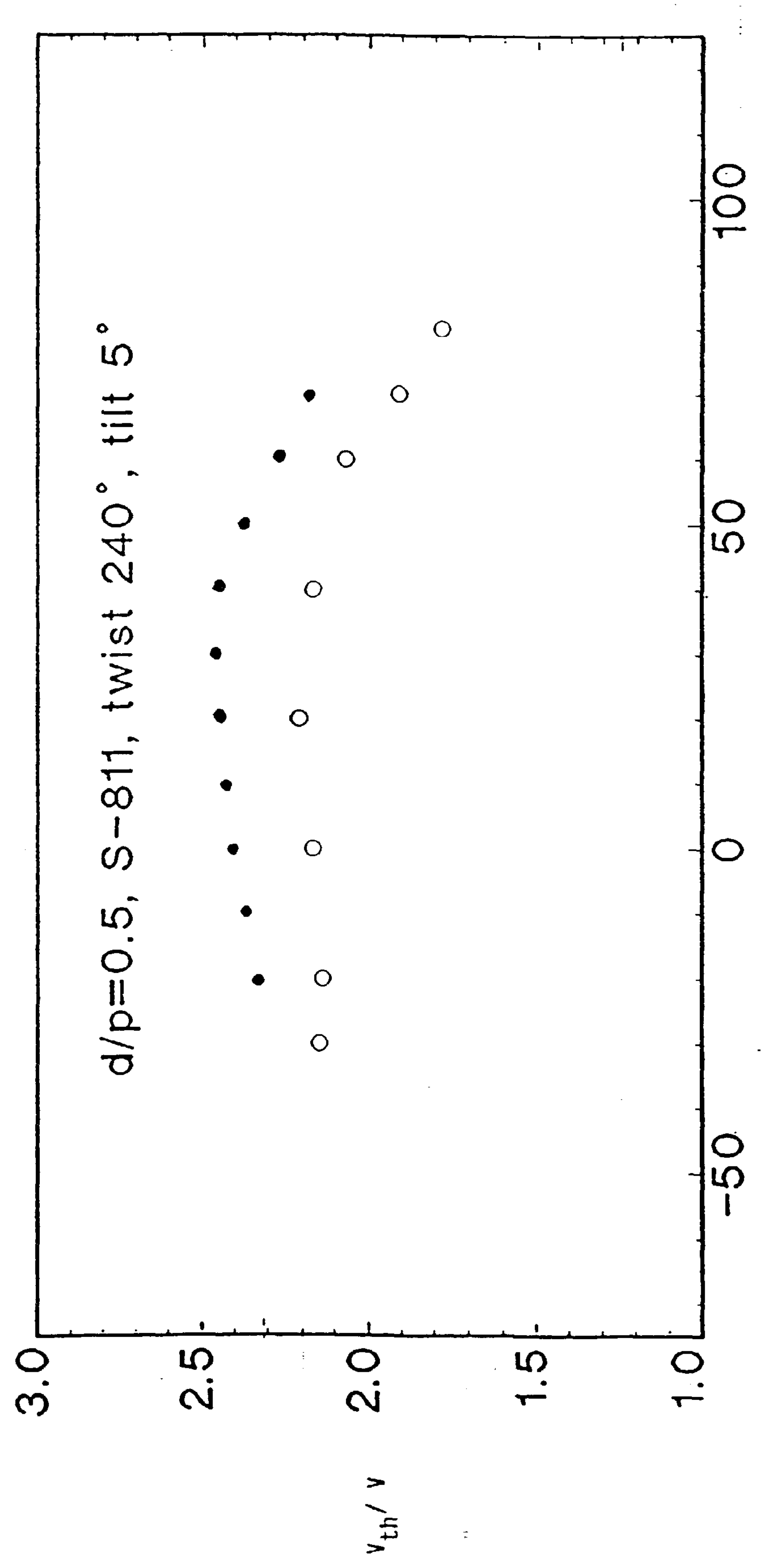


Fig. 1

**Fig.1** : Temperature dependence of threshold voltage

● Liquid crystal material according to the invention (see Example 1 a)

O State-of-the art mixture ZLI-4246-000 (trade product of E. Merck, Germany, see example 1 b)